# EUROPÄISCHE PATENTSCHRIFT

(11) **EP 0 520 316 B1**
(45) Veröffentlichungstag und Bekanntmachung des Hinweises auf die Patenterteilung: **15.01.1997**
(21) Anmeldenummer: 92110235.6
(22) Anmeldetag: 17.06.1992
(51) Int. Cl.: B01D 53/14, B01D 53/52

(54) **Verfahren zur selektiven H2S-Auswaschung**
Process for the selective removal of H2S
Procédé pour l'extraction sélective de H2S

(30) Priorität: 28.06.1991 DE 4121436
(43) Veröffentlichungstag der Anmeldung: 30.12.1992
(73) Patentinhaber: Linde Aktiengesellschaft, 65189 Wiesbaden (DE)
(72) Erfinder: Ranke, Gerhard, Dipl.-Ing., W-8134 Pöcking (DE)
(74) Vertreter: Schaefer, Gerhard, Dr.

## Beschreibung

Die Erfindung betrifft ein Verfahren zum Reinigen eines mindestens H₂S und CO₂ enthaltenden Rohgasstromes durch eine für H₂S selektive Sauergaswäsche mit einem chemisch wirkenden Waschmittel, wobei die Sauergaswäsche eine Waschsäule, eine H₂S-Anreicherungszone in einer Anreicherungssäule und eine Regeneriersäule umfaßt, wobei mit H₂S und CO₂ beladenes Waschmittel aus der Waschsäule in die Anreicherungssäule geführt wird, wobei aus der Anreicherungssäule mit H₂S angereichertes Waschmittel in die Regeneriersäule geleitet wird, wobei regeneriertes Waschmittel aus der Regeneriersäule im indirekten Wärmetausch gegen beladenes Waschmittel aus der Waschsäule erwärmt wird und in die Waschsäule rückgeführt wird, wobei das beladene Waschmittel vor der Einspeisung in die Anreicherungssäule einer Erwärmung und Drucksenkung unterzogen wird, wobei die H₂S-Anreicherung in der Anreicherungssäule in der Flüssigphase durchgeführt wird und wobei aus der Waschsäule ein H₂S-freier Produktgasstrom, aus der Anreicherungssäule ein Restgasstrom und aus der Regeneriersäule eine H₂S-reiche Gasfraktion gewonnen wird.

Selektive chemische H₂S-Wäschen finden überall dort Anwendung, wo aus einem Rohgas H₂S entfernt werden muß, im Rohgas ebenfalls enthaltenes CO₂ aber zumindest teilweise im Gas verbleiben kann oder soll. Beispiele für derart zu behandelnde Gase bilden Erdgas, Abgase aus einer Claus-Anlage oder Heizgase, bevorzugt für den Betrieb eines Gas- und Dampfturbinen-Kraftwerks (GuD-Kraftwerk). Gerade bei Heizgasen eines GuD-Kraftwerks wird angestrebt, daß ein möglichst geringer Teil des CO₂ bei der H₂S-Auswaschung dem Rohgas verlorengeht, da das CO₂ bei der Entspannung in der Gasturbine zusätzliche Energie liefert.

Bei der selektiven H₂S-Entfernung aus Rohgasen mittels chemischer Wäsche werden üblicherweise für die unterschiedlichen Anwendungsbereiche Verfahren mit einer Waschsäule und einer Warmregenerierung angewandt. Die für die H₂S-Auswaschung benötigte Bodenzahl in der Waschsäule ist dabei festgelegt durch die geforderte H₂S-Endreinheit des Rohgases. Ein derartiges Verfahren ist beispielsweise aus der DE-PS 24 22 581 bekannt.

Bei der Aufbereitung von Rohgasen mit einem im Verhältnis zum mitgeführten H₂S hohen CO₂-Anteil, wie sie beispielsweise bei der partiellen Oxidation von Kohle gewonnen werden, genügt oft eine selektive H₂S-Wäsche nicht aus, um eine Clausfähige Fraktion zu erhalten. In solchen Fällen wird die H₂SFraktion aus der ersten Wäsche einer zweiten Wäsche unterzogen, um eine H₂S-Fraktion mit einem für eine Claus-Anlage erforderlichen hohen H₂S-Gehalt zu erhalten. Nachteile hierbei sind, daß zwei komplette Wäschen eingesetzt werden müssen und daß das gesamte in der ersten Wäsche ausgewaschene und in der Regenerierung ausgetriebene H₂S in der Nachwäsche wieder gelöst werden muß.

Eine modifizierte Verfahrensvariante des beschriebenen Grundverfahrens lehrt die US-4,773,921. Im dort beschriebenen Verfahren wird zwischen Wasch- und Regeneriersäule eine Anreicherungssäule geschaltet. Das beladene Waschmittel wird aus der Waschsäule in die Anreicherungssäule geleitet, wo es mit einem Teilstrom der bei der Warmregenerierung gewonnenen und verdichteten H₂S-Fraktion gestrippt wird. Durch das Strippen mit dem H₂S-reichen Gas der H₂S-Fraktion muß das im Waschmittel gelöste CO₂ durch H₂S verdrängt werden. Dazu muß in der Anreicherungssäule mit einem hohen H₂S- Überschuß gearbeitet werden. Das von der Anreicherungssäule abgezogene H₂S/CO₂-Gasgesmisch muß daher verdichtet und in der Waschsäule erneut entschwefelt werden.

Die US-A-4 406 868 lehrt ein Verfahren zum Reinigen eines zumindest H₂S und CO₂ enthaltenden Rohgasstromes durch eine für H₂S selektive Sauergaswäsche mit einem chemisch wirkenden Waschmittel, wobei die Sauergaswäsche eine Waschsäule, eine H₂S-Anreicherungszone in einer Trennsäule und eine Regeneriersäule umfaßt, wobei mit H₂S und CO₂ beladenes Waschmittel aus der Waschsäule in die Trennsäule geführt wird, wobei aus der Trennsäule mit H₂S angereichertes Waschmittel in die Regeneriersäule geleitet wird, wobei regeneriertes Waschmittel aus der Regeneriersäule im indirekten Wärmetausch gegen beladenes Waschmittel aus der Waschsäule in die Waschsäule rückgeführt wird und wobei aus der Waschsäule ein H₂S-freier Produktgasstrom, aus der Trennsäule ein Restgasstrom und aus der Regeneriersäule eine H₂S-reiche Gasfraktion gewonnen wird. Das beladene Waschmittel aus der Absorptionssäule wird erwärmt und unter erniedrigtem Druck in die Trennsäule eingespeist. Das Waschmittel im Sumpf der Trennsäule wird über einen Reboiler angewärmt.

Aus der US-A-4 714 480 ist ein Verfahren zur selektiven Entfernung von H₂S aus einem zumindest H₂S und CO₂ enthaltenden Rohgasstromes durch eine für H₂S selektive Sauergaswäsche mit einem chemisch wirkenden Waschmittel bekannt. Das beladene Waschmittel wird nach Erwärmung gegen regeneriertes Waschmittel in einem Entspannungsbehälter entspannt. Der durch die Entspannung gewonnene Gasstrom wird in eine zweite Waschsäule eingeleitet, in die ein Teistrom des regenerierten Waschmittels von der Regeneriersäule eingespeist wird.

Der Erfindung liegt die Aufgabe zugrunde, ein Verfahren der eingangs genannten Art aufzuzeigen, mit dem die beschriebenen Nachteile auf einfache Art und Weise überwunden werden.

Diese Aufgabe wird erfindungsgemäß dadurch gelöst, daß ein Teilstrom des regenerierten Waschmittels vom zur Waschsäule rückgeführten Waschmittel abgezweigt und in eine Rückwaschzone im oberen Bereich der Anreicherungssäule geführt wird.

Es wurde gefunden, daß das in der Anreicherungszone bei der Anwärmung und Drucksenkung des beladenen Waschmittels freiwerdende Gas im wesentlichen aus CO₂ besteht. Es findet also eine H₂S-Anreicherung in der Flüssigphase statt. Der vom Kopf der Anreicherungssäule abgezogene Restgasstrom enthält einen hohen CO₂-Anteil und gegebenenfalls geringe Mengen an H₂S. Die Anwärmung des beladenen Waschmittels vor der Einleitung in die Anreicherungssäule erfolgt über einen indirekten Wärmetausch mit dem wärmeren, regeneriertem Waschmittel und gegebenenfalls zusätzlich über eine äußere Wärmezufuhr. Erfindungsgemäß wird ein Teilstrom des regenerierten Waschmittels in eine Rückwaschzone im oberen Bereich der Anreicherungssäule geführt. Dabei wird der Teilstrom des regenerierten Waschmittels an einer Stelle in die Anreicherungssäule geleitet, die über der Einspeisestelle des aus der Waschsäule abgezogenen, beladenem Waschmittel in die Anreicherungssäule liegt. Der eingeleitete Teilstrom löst wieder H₂S aus dem in der Anreicherungssäule freigesetzten Gas aus. Es kommt zu einer Rückwaschung des H₂S am Kopf der Anreicherungssäule. Der H₂S-Gehalt im Restgasstrom kann damit erheblich gesenkt werden.

Als chemische Waschmittel für die erfindungsgemäße selektive H₂S-Auswaschung sind vor allem tertiäre Amine und die sogenannten "spherical hindered" Amine geeignet. Mit Vorteil werden diese Waschmittel in wäßriger Lösung eingesetzt. Bei den tertiären Aminen beruht die Selektivität für H₂S gegenüber CO₂ auf der Reaktionsgeschwindigkeit, da CO₂ nicht unter Carbamat-Bildung, sondern nur als Bicarbonat/Carbonat chemisch gebunden werden kann. Bei den "spherical hindered" Aminen wird durch den Molekülaufbau und die Lage des Stickstoffes im Molekül die Reaktion mit CO₂ behindert, während H₂S ungehindert mit dem Amin reagieren kann. Für die chemische Wäsche können zum Waschmittel auch Zusätze zugegeben werden, die die Stoffeigenschaften der Amine verbessern.

Zusätzliche Vorteile sind im erfindungsgemäßen Verfahren dadurch zu erzielen, daß das Waschmittel im Sumpf der Anreicherungssäule erwärmt wird. Durch die Erwärmung des Waschmittels im Sumpf der Anreicherungsäule wird die Ausgasung des CO₂ unterstützt. Außerdem lassen sich die Temperaturen in der Anreicherungszone dadurch regeln. Die zuzuführende Wärme kann beispielsweise von den von der Warmregenerierung abgezogenen Waschmittel vor dem indirekten Wärmetausch mit dem aus der Waschsäule abgezogenen Waschmittel, von Wasser bzw. Wasserdampf oder von einem Fremdwärmeträger entnommen werden.

Ein Teil des vom Sumpf der Anreicherungsäule abgezogenen Waschmittels wird in einem Reboiler erwärmt, teilweise verdampft und wieder dem Sumpf zugegeben. Aufgrund des hohen Wassergehalts des Waschmittels besteht der Dampf hauptsächlich aus Wasserdampf. Das Waschmittel im Sumpf der Anreicherungssäule wird dabei mit dem Dampf gestrippt, wodurch im wesentlichen CO₂ aus dem Waschmittel freigesetzt wird.

Mit zusätzlichem Vorteil verbunden ist eine Verfahrensführung, bei der der Teilstrom des regenerierten Waschmittels aus der Regeneriersäule zur Rückwaschzone nach dem indirekten Wärmetausch mit dem in der Absorptionszone beladenen Waschmittel vom in die Absorptionszone geleiteten, regenerierten Waschmittel abgezweigt wird.

Im erfindungsgemäßen Verfahren kann mit Vorteil zwischen der Rückwaschzone und der Anreicherungszone der Anreicherungssäule eine Anwärmung des Waschmittels erfolgen. Die Anwärmung kann beispielsweise außerhalb der Anreicherungssäule durchgeführt werden, indem das Waschmittel oberhalb eines Zwischenbodens aus der Rückwaschzone der Anreicherungssäule abgezogen und nach Erwärmung in die Anreicherungszone der Anreicherungssäule unterhalb des Zwischenbodens wieder eingespeist wird. Das Waschmittel kann aber auch innerhalb der Anreicherungssäule über Wärmetauscher zwischen der Rückwaschzone und der Anreicherungszone erwärmt werden.

In Weiterbildung der Erfindung kann der aus der Anreicherungssäule abgezogene Restgasstrom verdichtet und dem aus der Waschsäule gewonnenen Produktgasstrom zugemischt werden. Das bringt beispielsweise beim speziellen Anwendungsfall eines Heizgases für ein GuD-Kraftwerk besondere Vorteile, da das CO₂ im Heizgas den Energieertrag des GuD-Kraftwerks erhöht. Ist jedoch der H₂S-Gehalt des Restgases noch höher als gefordert, kann in einer anderen Weiterbildung der Erfindung der aus der Anreicherungssäule abgezogene Restgasstrom verdichtet und in die Waschsäule an einer Stelle eingeleitet werden, die unterhalb der Einspeisestelle des regenerierten Waschmittels, aber oberhalb der Einspeisestelle des Rohgasstromes liegt. In der Waschsäule wird in diesem Fall aus den Restgas weiteres H₂S ausgewaschen, während CO₂ aufgrund der kurzen Kontaktzeit mit dem Waschmittel in der Absorptionszone mit dem Produktgas aus der Waschsäule abgezogen wird.

In weiterer Ausgestaltung der Erfindung wird der Rohgasstrom vor der Einleitung in die Waschsäule einer groben Vorwäsche unterzogen. In der Vorwäsche wird regeneriertes Waschmittel eingesetzt. Vor allem bei Rohgasen mit einem höheren H₂S-Gehalt fällt in der Vorwäsche wegen der kurzen Kontaktzeit zwischen Waschmittel und Rohgas ein beladener Waschmittelstrom an, der wegen seines hohen H₂S- aber geringen CO₂-Anteiles direkt in die Warmregenerierung gegeben werden kann, ohne zuvor angereichert werden zu müssen. Damit kann der Umsatz in der Anreicherungssäule verringert werden, so daß die insgesamt erforderliche Waschmittelmenge im erfindungsgemäßen Verfahren verringert werden kann.

Die Vorwäsche kann in einer kleineren, separaten Waschsäule erfolgen. Vorteilhafterweise werden die Vorwäsche in einem Säulenabschnitt einer Waschsäule unterhalb des Kaminbodens und die eigentliche Sauergaswäsche in derselben Waschsäule oberhalb des Kaminbodens durchgeführt. In der Vorwäsche werden im Vergleich zur Sauergaswäsche wesentlich weniger Böden eingesetzt. Die Vorwäsche weist lediglich etwa 1 bis 5 Böden auf. Wegen der guten Durchmischung bei sehr kurzer Kontaktzeit eignen sich für die Vorwäsche aber auch Strahlwäscher sehr gut.

Die Erfindung wird im folgenden anhand zweier schematisch dargestellter Ausführungsbeispiele noch näher erläutert.

Dabei zeigen:
- Figur 1:: Eine Wäsche mit Anreicherung und anschließender Regenerierung des Waschmittels und
- Figur 2:: das erfindungsgemäße Verfahren mit zusätzlicher Vorwäsche.

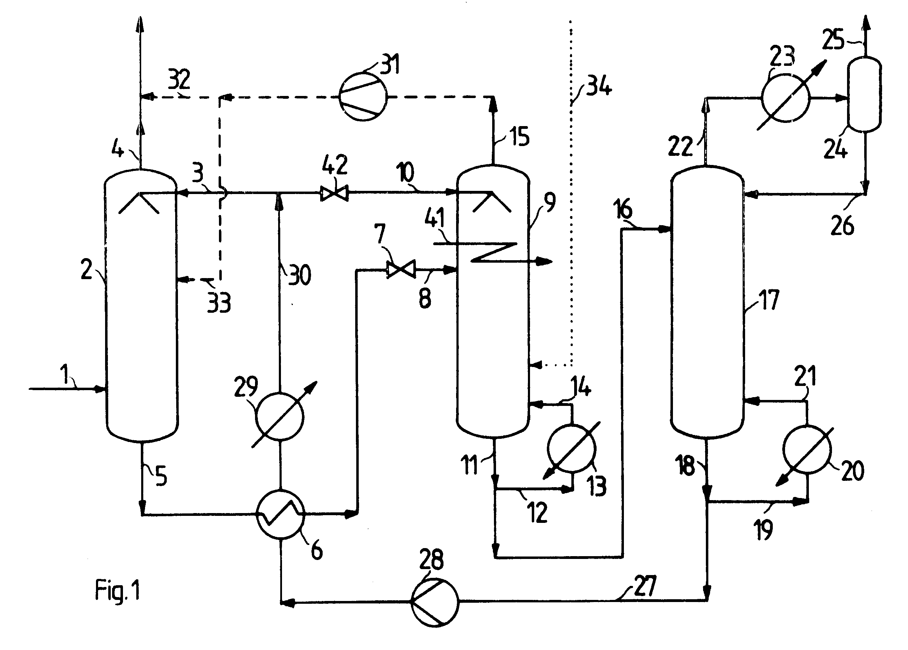

In Figur 1 wird ein unter anderem H₂S und CO₂ haltiger Rohgasstrom 1 in die Waschsäule 2 eingeleitet. Am Kopf der Waschsäule 2 wird regeneriertes Waschmittel über Leitung 3 der Waschsäule 2 aufgegeben. Die Wäsche wird bei Rohgasdruck zwischen 5 und 100 bar und bei tiefen Temperaturen durchgeführt. Die Sumpftemperatur der Waschsäule liegt etwa zwischen 40 und 80°C, bevorzugt zwischen 50 und 70°C. Am Kopf der Waschsäule 2 wird ein Produktgasstrom 4 gewonnen. Beladenes Waschmittel wird vom Sumpf der Waschsäule 2 über Leitung 5 abgezogen und nach indirektem Wärmetausch 6 mit dem regenerierten Waschmittel und nach einer Entspannung (7) über Leitung 8 in die Anreicherunssäule 9 geführt. Am Kopf der Anreicherungssäule 9 wird ein Teilstrom des regenerierten Waschmittels nach seiner Entspannung (42) über Leitung 10 zugeführt. Er dient zur Rückwaschung des H₂S in der Anreicherungssäule 9. Zwischen der Rückwaschzone im oberen Bereich der Anreicherungssäule 9 und der Einspeisestelle (8) des beladenen Waschmittels aus der Waschsäule 2 wird das Waschmittel erwärmt (41). Die H₂S-Anreicherung findet in der Flüssigphase in der Anreicherungszone unterhalb der Einspeisestelle des beladenen Waschmittels aus der Waschsäule 2 statt. Beladenes angereichertes Waschmittel wird vom Sumpf der Anreicherungssäule 9 über Leitung 11 abgezogen, wobei ein Teilstrom des Waschmittels aus Leitung 11 über Leitung 12 in einem Reboiler 13 erwärmt, teilweise verdampft und anschließend in die Anreicherungssäule 9 über Leitung 14 zurückgeführt wird.

Vom Kopf der Anreicherungssäule 9 wird über Leitung 15 ein Restgasstrom aus der Anreicherungssäule abgezogen. Der nicht in die Anreicherungssäule rückgeführte Teil des Waschmittels aus Leitung 11 wird über Leitung 16 in die Regeneriersäule 17 geführt. In der Regeneriersäule 17 wird das Waschmittel durch eine Warmregenerierung von den gelösten Sauergasen befreit. Vom Sumpf der Regeneriersäule 17 wird über Leitung 18 regeneriertes Waschmittel abgezogen, wovon ein Teil über Leitung 19, den Reboiler 20 und Leitung 21 wieder in die Regeneriersäule 17 rückgeführt wird. Auf diese Weise wird für die Warmregenerierung erforderlicher Strippdampf erzeugt. Die Temperatur im Sumpf der Regeneriersäule 17 liegt etwa zwischen 100 und 130°C. Vom Kopf der Regeneriersäule 17 wird das in der Warmregenerierung freiwerdende Gas über Leitung 22 abgezogen, im Kondensator 23 gekühlt und in den Abscheider 24 geleitet. Vom Abscheider 24 wird über Leitung 25 die H₂S-Fraktion abgezogen, während das Kondensat, hauptsächlich auskondensiertes Wasser, über Leitung 26 wieder in die Regeneriersäule 17 zurückgeführt wird. Der nicht über den Reboiler 20 in die Warmregenerierung zurückgeführte Teil des regenerierten Waschmittels aus Leitung 18 wird über Leitung 27 zur Pumpe 28 geführt. Das regenerierte Waschmittel wird anschließend im Wärmetauscher 6 mit beladenem Waschmittel gekühlt und zusätzlich im Wärmetauscher 29, vorzugsweise mit Kühlwasser, auf die für die Sauergaswäsche notwendige Temperatur abgekühlt. Der kalte Waschmittelstrom 30 wird anschließend in einen Hauptstrom in Leitung 3, der in die Absorptionszone der Waschsäule 2 geleitet wird, und einen Teilstrom 10, der in die Anreicherungssäule 9 geführt wird, aufgeteilt.

Das in Figur 1 gezeigte Verfahren kann zusätzlich folgende, gestrichelt dargestellte Ergänzungen erhalten. Der aus der Anreicherungssäule 9 abgezogene Restgasstrom 15 kann nach Verdichtung (31) dem Produktgasstrom zugemischt (32) oder in die Waschsäule eingeleitet (33) werden. Wird die H₂S-Fraktion aus Leitung 25 in eine Claus-Anlage mit anschließender Schwefel-Hydrierung gegeben, kann das Claus Tail Gas über Leitung 34 in die Anreicherungssäule 9 eingeleitet werden.

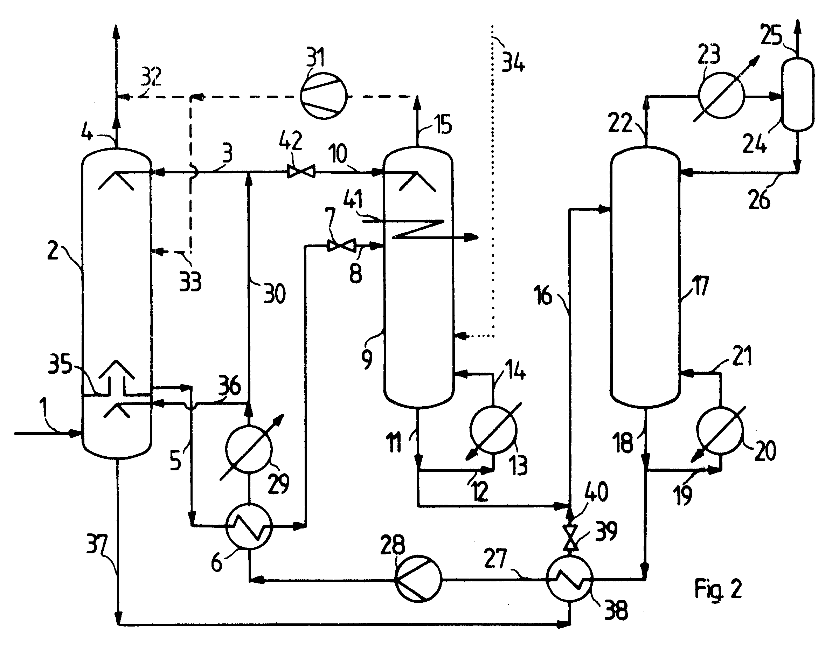

In Figur 2 ist eine weitere beispielhafte Ausführungsform des erfindungsgemäßen Verfahrens dargestellt. Äquivalente Verfahrensmerkmale zum Verfahren aus Figur 1 sind mit identischen Bezugsziffern bezeichnet. Im Unterschied zum Verfahren aus Figur 1 benutzt das Verfahren nach Figur 2 eine Vorwäsche des Rohgases. Die Waschsäule 2 ist dazu durch einen Kaminboden 35 in zwei Bereiche unterteilt. In der Absorptionszone oberhalb des Kaminbodens 35 findet die eigentliche H₂S-Auswaschung statt. Unterhalb des Kaminbodens 35 befindet sich die Vorwaschzone mit beispielsweise 2 Böden. Für die Vorwäsche wird vom gekühlten regenerierten Waschmittel in Leitung 30 ein Teilstrom 36 abgezweigt und unterhalb des Kaminbodens 35 in die Waschsäule 2 geleitet. Von der Vorwaschzone im Sumpfbereich der Waschsäule 2 wird aus der Vorwäsche beladenes Waschmittel über Leitung 37 abgezogen, im Wärmetauscher 38 mit bereits regeneriertem Waschmittel aus Leitung 27 angewärmt, entspannt (39) und über Leitung 40 dem angereicherten Waschmittelstrom in Leitung 16 zugemischt.

## Patentansprüche

1. Verfahren zum Reinigen eines mindestens H₂S und CO₂ enthaltenden Rohgasstromes (1) durch eine für H₂S selektive Sauergaswäsche mit einem chemisch wirkenden Waschmittel,
wobei die Sauergaswäsche eine Waschsäule (2), eine H₂S-Anreicherungszone in einer Anreicherungssäule (9) und eine Regeneriersäule (17) umfaßt,
wobei mit H₂S und CO₂ beladenes Waschmittel (5, 8) aus der Waschsäule (2) in die Anreicherungssäule (9) geführt wird,
wobei aus der Anreicherungssäule (9) mit H₂S angereichertes Waschmittel (16) in die Regeneriersäule (17) geleitet wird,
wobei regeneriertes Waschmittel (27) aus der Regeneriersäule (17) im indirekten Wärmetausch (6) gegen beladenes Waschmittel (5) aus der Waschsäule (2) gekühlt wird unter gleichzeitiger Erwärmung des beladenen Waschmittels und in die Waschsäule (2) rückgeführt wird (3),
wobei das beladene Waschmittel (5) vor der Einspeisung (8) in die Anreicherungssäule (9) einer Drucksenkung (7) unterzogen wird,
wobei die H₂S-Anreicherung in der Anreicherungssäule (9) in der Flüssigphase durchgeführt wird und
wobei aus der Waschsäule (2) ein H₂S-freier Produktgasstrom (4), aus der Anreicherungssäule (9) ein Restgasstrom (15) und aus der Regeneriersäule (17) eine H₂S-reiche Gasfraktion (25) gewonnen wird,
wobei ein Teilstrom (12) des von der Anreicherungssäule abgezogenen Waschmittels (11) in einem Reboiler (13) erwärmt und in die Anreicherungszone (9) zurückgeführt wird,
**dadurch gekennzeichnet,**
daß ein Teilstrom (10) des regenerierten Waschmittels vom zur Waschsäule rückgeführten Waschmittel (30) abgezweigt und in eine Rückwaschzone im oberen Bereich der Anreicherungssäule (9) geführt wird, wodurch der H₂S-Gehalt im Restgasstrom (15) erheblich gesenkt wird.

2. Verfahren nach Anspruch 1, dadurch gekennzeichnet, daß der Teilstrom (10) des regenerierten Waschmittels zur Rückwaschzone nach dem Wärmetausch (6) mit dem beladenen Waschmittel (5) vom in die Absorptionszone geleiteten, regenerierten Waschmittel (30) abgezweigt wird.

3. Verfahren nach einem der Ansprüche 1 oder 2, dadurch gekennzeichnet, daß zwischen der Rückwaschzone und der Anreicherungszone der Anreicherungssäule (9) eine Anwärmung (41) des Waschmittels erfolgt.

4. Verfahren nach einem der Ansprüche 1 bis 3, dadurch gekennzeichnet, daß der aus der Anreicherungssäule (9) abgezogene Restgasstrom (15) verdichtet (31) und dem Produktgasstrom (4) zugemischt (32) wird.

5. Verfahren nach einem der Ansprüche 1 bis 4, dadurch gekennzeichnet, daß der aus der Anreicherungssäule (9) abgezogene Restgasstrom (15) verdichtet (31) und in die Waschsäule (2) an einer Stelle eingeleitet (33) wird, die zwischen der Einspeisestelle des regenerierten Waschmittels (3) und der des Rohgasstromes (1) liegt.

6. Verfahren nach einem der Ansprüche 1 bis 5, dadurch gekennzeichnet, daß der Rohgasstrom (1) vor der Sauergaswäsche einer Vorwäsche mit regeneriertem Waschmittel (36) unterzogen wird.

7. Verfahren nach Anspruch 6, dadurch gekennzeichnet, daß die Vorwäsche in einem Säulenabschnitt unterhalb eines Kaminbodens (35) in der Waschsäule (2) durchgeführt wird.

8. Verfahren nach Anspruch 7, dadurch gekennzeichnet, daß die Vorwäsche in einem Strahlwäscher durchgeführt wird.

## Claims

1. Process for cleaning an untreated gas stream (1) containing at least H₂S and CO₂ by means of an acid gas scrubber selective for H₂S containing a chemically active scrubbing medium,
the acid gas scrubber comprising a scrubbing column (2), an H₂S enrichment zone in an enrichment column (9) and a regeneration column (17),
the scrubbing medium (5, 8) laden with H₂2 and CO₂ being conducted from the scrubbing column (2) to the enrichment column (9),
H₂S-enriched scrubbing medium (16) being passed from the enrichment column (9) to the regeneration column (17),
regenerated scrubbing medium (27) from the regeneration column (17) being cooled in indirect heat exchange (6) with laden scrubbing medium (5) from the scrubbing column (2), with simultaneous heating of the laden scrubbing medium, and being recycled (3) to the scrubbing column (2),
the laden scrubbing medium (5) being subjected to pressure reduction (7) prior to feed (8) into the enrichment column (9),
the H₂S enrichment being carried out in the liquid phase in the enrichment column (9) and
an H₂S-free product gas stream (4) being obtained from the scrubbing column (2), a residual gas stream (15) being obtained from the enrichment column (9) and an H₂S-rich gas fraction (25) being obtained from the regeneration column (17),
a part-stream (12) of the scrubbing medium (11) taken off from the enrichment column being heated in a reboiler (13) and returned to the enrichment zone (9),
characterized in that
a part-stream (10) of the regenerated scrubbing medium is branched off from the scrubbing medium (30) recycled to the scrubbing column and is conducted to a backwash zone in the upper area of the enrichment column (9), which considerably decreases the H₂S content in the residual gas stream (15).

2. Process according to Claim 1, characterized in that the part-stream (10) of the regenerated scrubbing medium to the backwash zone is branched off from the regenerated scrubbing medium (30) passed into the absorption zone downstream of the heat exchange (6) with the laden scrubbing medium (5).

3. Process according to one of Claims 1 or 2, characterized in that the scrubbing medium is heated (41) between the backwash zone and the enrichment zone of the enrichment column (9).

4. Process according to one of Claims 1 to 3, characterized in that the residual gas stream (15) taken off from the enrichment column (9) is compressed (31) and admixed (32) to the product gas stream (4).

5. Process according to one of Claims 1 to 4, characterized in that the residual gas stream (15) taken off from the enrichment column (9) is compressed (31) and introduced (33) into the scrubbing column (2) at a position which is between the feed position for the regenerated scrubbing medium (3) and that of the untreated gas stream (1).

6. Process according to one of Claims 1 to 5, characterized in that the untreated gas stream (1) is subjected to a preliminary scrubbing with regenerated scrubbing medium (36) upstream of the acid gas scrubber.

7. Process according to Claim 6, characterized in that the preliminary scrubbing is carried out in a column section beneath a chimney-cap plate (35) in the scrubbing column (2).

8. Process according to Claim 7, characterized in that the preliminary scrubbing is carried out in a jet scrubber.

## Revendications

1. Procédé de nettoyage d'un courant de gaz brut (1) contenant au moins H₂S et CO₂ grâce à un lavage à gaz acide sélectif pour H₂S avec un détergent agissant chimiquement,
le lavage à gaz acide comprenant une colonne de lavage (2), une zone d'enrichissement en H₂S dans une colonne d'enrichissement (9) et une colonne de régénération (17), le détergent chargé de H₂S et de CO₂ (5, 8) étant acheminé hors de la colonne de lavage (2) jusqu'à la colonne d'enrichissement (9),
du détergent enrichi de H₂S (16) étant acheminé hors de la colonne d'enrichissement (9) jusqu'à la colonne de régénération (17),
le détergent régénéré (27) en provenance de la colonne de régénération (17) étant refroidi par échange thermique indirect (6) contre du détergent chargé (5) en provenance de la colonne de lavage (2), avec échauffement simultané du détergent chargé, et étant reconduit (3) dans la colonne de lavage (2),
le détergent chargé (5) étant soumis, avant l'injection (8) dans la colonne d'enrichissement (9), à un abaissement de pression (7),
l'enrichissement en H₂S dans la colonne d'enrichissement (9) étant effectué en phase liquide et
un courant de gaz brut exempt de H₂S (4) étant extrait de la colonne de lavage (2), un courant de gaz résiduel (15) étant extrait de la colonne d'enrichissement (9) et une fraction gazeuse riche en H₂S (25) étant extraite de la colonne de régénération (17),
un courant partiel (12) du détergent (11) retiré de la colonne d'enrichissement étant réchauffé dans un rebouilleur (13) et reconduit dans la colonne d'enrichissement (9),
caractérisé en ce que
un courant partiel (10) du détergent régénéré est dérivé du détergent (30) reconduit jusqu'à la colonne de lavage et acheminé dans une zone de lavage en retour dans la partie supérieure de la colonne d'enrichissement (9), la teneur en H₂S dans le courant de gaz résiduel (15) étant fortement abaissée.

2. Procédé selon la revendication 1, caractérisé en ce que le courant partiel (10) du détergent régénéré est prélevé du détergent régénéré (30), acheminé dans la zone d'absorption, en direction de la zone de lavage en retour, après l'échange thermique (6) avec le détergent chargé (5).

3. Procédé selon l'une quelconque des revendications 1 ou 2, caractérisé en ce que se produit, entre la zone de lavage en retour et la zone d'enrichissement de la colonne d'enrichissement (9), un réchauffement (41) du détergent.

4. Procédé selon l'une quelconque des revendications 1 à 3, caractérisé en ce que le courant de gaz résiduel (15) retiré de la colonne d'enrichissement (9) est condensé (31) et mélangé (32) au courant de gaz de production (4).

5. Procédé selon l'une quelconque des revendications 1 à 4, caractérisé en ce que le courant de gaz résiduel (15) retiré de la colonne d'enrichissement (9) est condensé (31) et introduit (33) dans la colonne de lavage (2) en un point qui se trouve entre le point d'alimentation du détergent régénéré (3) et celui du courant de gaz brut (1).

6. Procédé selon l'une quelconque des revendications 1 à 5, caractérisé en ce que le courant de gaz brut (1) est soumis avant le lavage à gaz acide à un lavage préalable à l'aide du détergent régénéré (36).

7. Procédé selon la revendication 6, caractérisé en ce que le lavage préalable est effectué dans un tronçon de colonne en-dessous d'un fond de cheminée (35) dans la colonne de lavage (2).

8. Procédé selon la revendication 7, caractérisé en ce que le lavage préalable est effectué dans un laveur à jet.
